# EUROPÄISCHE PATENTANMELDUNG

(11) **EP 2 072 977 A1**
(43) Veröffentlichungstag der Anmeldung: **24.06.2009**
(21) Anmeldenummer: 08105651.7
(22) Anmeldetag: 24.10.2008
(51) Int. Cl.: G01J 1/04, B60H 1/00

(54) **Sensoreinrichtung, insbesondere für ein Kraftfahrzeug**

(30) Priorität: 20.12.2007 DE 102007061746
(71) Anmelder: ROBERT BOSCH GMBH, 70442 Stuttgart (DE)
(72) Erfinder: Bochat, Ralf, 77830, Buehlertal (DE)

(57) **Zusammenfassung**

Die Erfindung betrifft eine Sensoreinrichtung (10), insbesondere für ein Kraftfahrzeug, mit einem Lichtleitkörper (12), durch den Lichtstrahlung gebündelt und über mindestens ein Empfängerelement (16) detektierbar ist.

Es wird vorgeschlagen, dass zur Vergrößerung der lichtemfindlichen Fläche des Empfängerelements (16) zwischen Lichtleitkörper (12) und Empfängerelement (16) ein Diffusorelement (18) zwischengeschaltet ist.

## Beschreibung

Aus der DE 10 2004 055 060 Al ist eine gattungsgemäße Sensoreinrichtung für die Steuerung einer Temperatur beeinflussenden Einrichtung eines Kraftfahrzeuges, beispielsweise einer Klimaanlage oder einer Lüftung bekannt, die im wesentlichen aus einem Lichtleitkörper (Linsenoptik) sowie drei Empfängern besteht, über die Licht- bzw. Sonnenstrahlung erfasst wird. In Abhängigkeit von der gemessenen Lichtintensität - die im Kraftfahrzeug ein entsprechendes Raumklima erzeugt- wird beispielsweise die Klimaanlage oder die Belüftung des Kraftfahrzeuges geregelt. Der durch die Linsenoptik erzeugte Fokuspunkt des einfallenden Sonnenlichts wandert in Abhängigkeit vom Sonnenwinkel auf der lichtempfindlichen Fläche des Empfängers. Bei konstanter Lichtintensität werden in Abhängigkeit vom einfallenden Sonnenwinkel unterschiedlich große Flächen des Empfängers beaufschlagt und dadurch unterschiedliche große Signale am Empfänger erzeugt. Idealerweise sollte dabei die Größe des Fokus- bzw. Lichtpunktes in etwa der Größe der lichtempfindlichen Fläche des Empfängers entsprechen. Dadurch ergeben sich jedoch hinsichtlich der Positionierung und des Größe der Detektoren Probleme in Bezug auf das Linsensystem. Ist die Größe der lichtempfindlichen Fläche kleiner als die des Lichtpunktes (Fokuspunkt), so verändert sich die Kennlinie des Lichtsignals in Abhängigkeit des Scnnenstands derart, dass zunehmend Mehrdeutigkeiten, d.h. Winkelwerte, zu denen mehrere Lichtsignalwerte zuordenbar sind, auftreten können. Damit kann aus dem vom Sensor gelieferten Messwert kein eindeutiger Winkel mehr berechnet werden. Der Effekt verstärkt sich bei Verwendung von Empfängern bzw. Detektoren mit kleinen lichtempfindlichen Flächen.

In der DE 689 10 025 T2 ist ein Photodetektorsystem mit beeinflussbarer positionsabhängiger Empfindlichkeit dargestellt und beschrieben, das u.a. einen Lichtdiffusor zur Streuung des auf den Fotodetektor treffenden Lichtes aufweist. Diese Anordnung weißt jedoch kein Linsensystem zur Fokussierung des Sonnenlichtes auf und in Abhängigkeit vom Sonneneinstrahlwinkel ändert sich auch die Wegstrecke, welches das Licht durch den Diffusor nehmen muss, um zum Detektor zu gelangen. Durch den halbkugelförmigen Aufbau des Diffusors wird weiterhin erheblicher Bauraum beansprucht, der z.B. eine platzsparende Aufnahme in einem an der Frontschutzscheibe integrierten Regensensor/Sonnenlichtsensor-Modul erschwert.

Aufgabe der Erfindung ist es, die oben aufgeführten Nachteile einer derartigen Sensoreinrichtung zu vermeiden.

Die Lösung der Aufgabe erfolgt dabei durch die im Anspruch 1 angegebenen Merkmale.

Durch den Einsatz eines zwischen Linsenoptik und Emfänger angeordneten Diffusorelements konnte experimentell nachgewiesen werden, dass ein homogenerer Verlauf der Sonnenwinkelcharakteristik erreichbar ist. Durch das Diffusorelement werden die Kennlinienbereiche "geglättet" und die lichtempfindliche Fläche vergrößert. Letzteres hat den Vorteil, dass Empfänger bzw. Lichtsensoren mit kleineren lichtempfindlichen Flächen verwendet werden können. Das wiederum bringt Kostenvorteile, da die Preise für derartige Sensoreinrichtungen stark von der Grösse der lichtempfindlichen Chipfläche abhängig sind.

In den Unteransprüchen sind weitere vorteilhafte Ausgestaltungen und Verbesserungen, der erfindungsgemäßen Sensoreinrichtung enthalten.

Dadurch, dass das Empfängerelement vollständig vom Diffusor umschlossen ist, wird ein homogenerer Kennlinienverlauf über das gesamte Sonnentainkelspektrum sichergestellt.

Die Höhe (H) und die Breite (B) des quaderförmig ausgebildeten Diffusorelements sind auf vorteilhafte Art und Weise auf die Größe des Empfängerelements der Sensoreinrichtung abgestimmt. Damit wird trotz fahrzeugbedingt unterschiedlich groß dimensionierter Sensoreinrichtungen ein replizierbares homogenes Messergebnis sichergestellt.

Zur Platz sparenden und lagerichtigen Positionierung der Sensoreinrichtung wird vorgeschlagen, diese in einem an der Frontscheibe eines Kraftfahrzeuges angeordneten Regensensormoduls zu integrieren.

Ein Ausführungsbeispiel der Erfindung ist in der nachfolgenden Beschreibung und Zeichnung näher erläutert.

Es zeigen:
Figur 1 eine Prinzipdarstellung für die Erfassung der Sonneneinstrahlung bei einem Kraftfahrzeug in einer ersten Ansicht,
Figur 2 eine Prinzipdarstellung für die Erfassung der Sonneneinstrahlung bei einem Kraftfahrzeug in einer zweiten Ansicht
   und
Figur 3 eine schematische Darstellung des Aufbaus einer Sensoreinrichtung zur Erfassung der Sonneneinstrahlung.

### Beschreibung des Ausführungsbeispiels

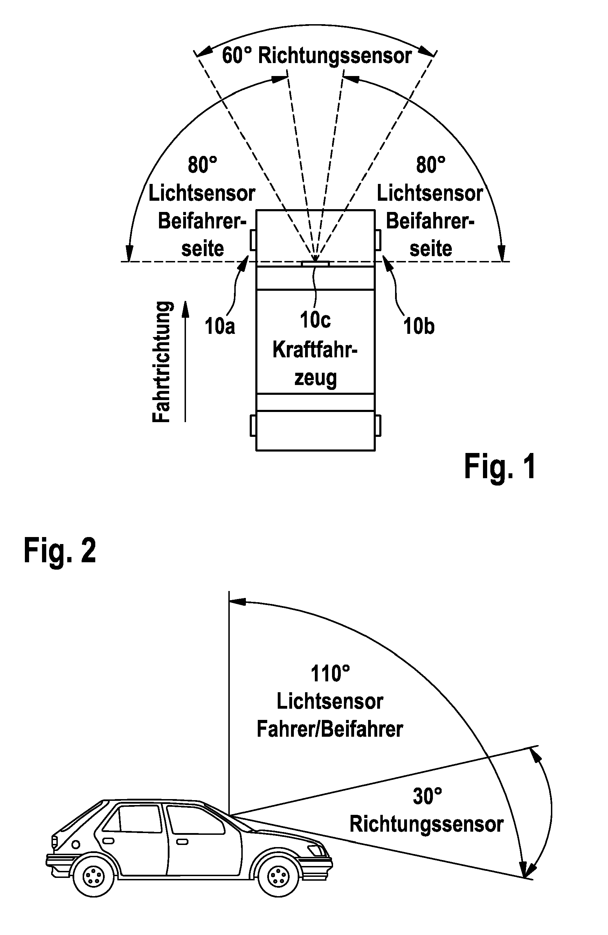

In gängigen Kraftfahrzeugen werden Sensoreinrichtungen eingesetzt, über die mittels eines Empfängerelements, im folgenden als Sonnenstandssensor 10 bezeichnet, die Einstrahlung und die Intensität der Wärmeeinstrahlung durch die Sonne auf das Fahrzeuginnere ermittelt wird. Mit Hilfe der Messsignale des Sonnenstandssensors 10 wird die Steuerung der Klimaanlage des Kraftfahrzeuges beeinflusst, dergestalt, dass die stärker durch die Sonne beaufschlagte Seite des Kraftfahrzeuges durch die Klimaanlage stärker gekühlt wird (Monozonen bzw. Bizonenklimaanlagen). Im vorliegenden Ausführungsbeispiel werden -wie in Figur 1 dargestellt- die Informationen des Einstrahlwinkels der Sonne mittels der Signale dreier unterschiedlich ausgerichteter Sensoren 10a, 10b und 10c gewonnen, wobei alle drei Sensoren 10a, 10b, 10c zusammen die Lichtintensität der Sonne in einem Bereich von 180° in Fahrtrichtung erfassen. Als Sensor kommt in der Regel eine lichtempfindliche Diode (LDR), ein lichtempfindlicher Transistor oder ein vergleichbares lichtempfindliches Bauelement mit einer entsprechenden Auswerteschaltung zum Einsatz. Die winkelspezifische Ausrichtung der Erfassungsbereiche der drei Sensoren 10a, 10b und 10c erfolgt durch eine für diesen Zweck speziell ausgelegte Linsenanordnung 12, die später noch näher beschrieben ist. Bei der Verwendung der drei Sensoren 10a, 10b und 10c erfasst der erste und zweite Sensor 10a, 10b jeweils einen Bereich von ca. 80° auf der Fahrer- bzw. Beifahrerseite, während der dritte Sensor 10c als so genannter Riehtungssensor die Lichteinstrahlung in einem Bereich von ca. 60° direkt nach vorn erfaßt. Die Sensoren 10a, 10b auf der Fahrer- und Beifahrerseite sind jeweils um ca. 45° nach oben ausgerichtet und decken einen Öffnungswinkel von ca. 110° ab; der Richtungssensor 10c ist in der Regel ebenfalls 45° nach oben ausgerichtet und besitzt einen Öffnungswinkel von ca. 30° (siehe Figur 2).

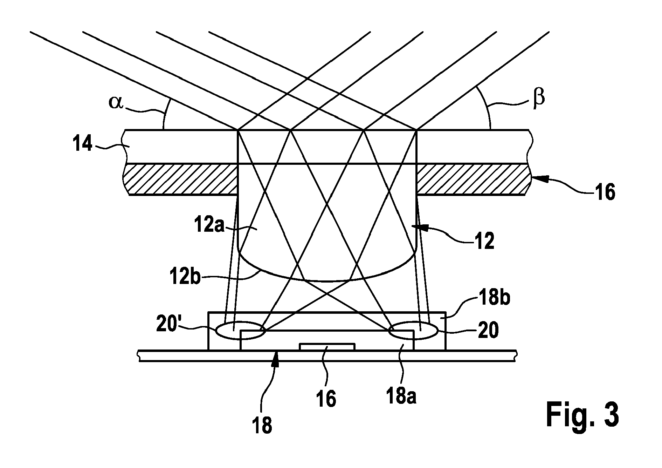

Im nachfolgenden wird anhand von Figur 3 mit Hilfe eines Schnittes durch eine Windschutzscheibe eines Kraftfahrzeuges der Aufbau der Sensoren 10a, 10b, 10c näher erläutert. Da der Aufbau aller drei Sensoren im Wesentlichen gleich ist, ist in Figur 3 nur ein Sensor 10 dargestellt worden. Die Linsenanordnung 12 ist an der Innenseite der Frontscheibe 14 des Kraftfahrzeuges befestigt. Der Sensor 10 weist dabei einen lichtsensitiven Chip 16 auf, der bspw. als CCD-Element oder als einfache Fotodiode ausgebildet ist.

Der lichtempfindliche Chip 16 ist von einem Lichtdiffusorelement, im Folgenden als Diffusor 18 bezeichnet, umschlossen, dessen Funktionsweise noch erläutert wird. In Figur 3 sind zur Veranschaulichung des Wirkprinzips zwei Diffusorelemente 18a, 18b mit unterschiedlichen Abmessungen (Höhe (H) und Breite (B)) dargestellt, wobei in der praktischen Ausführung nur ein Diffusorelement 18 zum Einsatz kommt. Das von der Körperform als Quader ausgebildete Diffussorelement 18 umschliesst dabei mit seiner Deck- und den vier Seitenflächen den Chip 16 vollständig.

Gelangt Licht- bzw. Sonnenstrahlung unter einem Winkel α auf die Frontscheibe 14 des Kraftfahrzeuges, wird sie zum optisch dichteren Medium hin gebrochen und gelangt in den zylinderförmig ausgebildeten Abschnitt 12a der Linsenanordnung 12, die einen ähnlichen Brechungsindex wie die Frontscheibe 14 aufweist. In diesem zylindrischen Abschnitt 12a wird die Strahlung in Richtung eines fokussierenden Abschnittes 12b geführt, der als konvex gekrümmte Fläche die Linsenanordnung 12 zum lichtempfindlichen Chip 16 hin bodenartig begrenzt. Dadurch wird ausserhalb der Linsenanordnung 12, aber innerhalb bzw. im Randbereich des Diffusors 18a ein Fokuspunkt 20 erzeugt, der aufgrund der optischen (Streu-) Eigenschaften des Diffusors 18a als Meßsignal vom lichtempfindlichen Chip 16 erfasst wird. Durch eine Anpassung der Diffusorgröße (siehe Diffusor 18b) kann auch sichergestellt werden, dass der Fokuspunkt 20 vollständig innerhalb des Diffusorraumes abgebildet wird.

Der gleiche Vorgang findet statt, wenn das Sonnenlicht unter einem anderen Winkel β auf die Frontscheibe 14 des Kraftfahrzeuges auftrifft. Hier liegt der Fokuspunkt 20' ebenfalls zumindest teilweise innerhalb des Diffusors 18 und wird damit durch den lichtempfindlichen Chip 16 als Messsignal erfasst. Sonnenstrahlung, die innerhalb des Winkelbereichs α - β auf die Frontscheibe 14 auftrifft, wird dann auch durch den kleiner dimensionierten Diffuser 18a vollständig erfasst.

## Patentansprüche

1. Sensoreinrichtung (10), insbesondere für ein Kraftfahrzeug, mit einem Lichtleitkörper (12), durch den Lichtstrahlung gebündelt und über mindestens ein Empfängerelement (16) detektierbar ist, **dadurch gekennzeichnet, dass** zur Vergrößerung der lichtempfindlichen Fläche des Empfängerelements (16) zwischen Lichtleitkörper (12) und Empfängerelement (16) ein Diffusorelement (18) zwischengeschaltet ist.

2. Sensoreinrichtung (10) nach Anspruch 1, **dadurch gekennzeichnet, dass** das Empfängerelement (16) vollständig vom Diffusorelement (18) umschlossen ist.

3. Sensoreinrichtung (10)nach Anspruch 1 oder 2, **dadurch gekennzeichnet, dass** das Diffusorelement (18) eine Höhe H und eine Breite B aufweist, die auf die Grösse des Empfängerelements (16) abgestimmt ist.

4. Sensoreinrichtung (10) nach Anspruch 3, **dadurch gekennzeichnet, dass** das Difussorelement (18) umso breiter ausgelegt ist, umso grösser die lichtempfindliche Fläche des Empfängerelements (16) ist.

5. Sensoreinrichtung (10) nach einem der vorhergehenden Ansprüche, **dadurch gekennzeichnet, dass** das Diffusorelement (18) quaderförmig ausgebildet ist.

6. Sensoreinrichtung (10) nach einem der vorhergehenden Ansprüche, **dadurch gekennzeichnet, dass** die Sensoreinrichtung (10) in einem an der Frontscheibe (14) eines Kraftfahrzeuges angeordneten Regensensor integriert ist.
